# EUROPÄISCHE PATENTSCHRIFT

(11) **EP 3 654 873 B1**
(45) Veröffentlichungstag und Bekanntmachung des Hinweises auf die Patenterteilung: **18.01.2023**
(21) Anmeldenummer: 18785284.3
(22) Anmeldetag: 01.10.2018
(51) Int. Cl.: A61C 13/00, A61C 13/08, A61C 13/14, B29C 35/02

(54) **MONOCHROME KOMPOSIT-FRÄSBLÖCKE SOWIE VERFAHREN ZU DEREN HERSTELLUNG**
MONOCHROME COMPOSITE MILLING BLOCKS AND METHOD FOR THE PRODUCTION THEREOF
BLOC DE FRAISAGE COMPOSITE MONOCHROME ET SON PROCÉDÉ DE FABRICATION

(30) Priorität: 04.10.2017 DE 102017122993
(43) Veröffentlichungstag der Anmeldung: 27.05.2020
(73) Patentinhaber: Kulzer GmbH, 63450 Hanau (DE)
(72) Erfinder: RUPPERT, Klaus, 63477 Maintal (DE); HOHMANN, Alfred, 61389 Schmitten (DE); DEKERT, Stephan, 61273 Wehrheim (DE); HAMBACH, Andrea, 61250 Usingen (DE)
(74) Vertreter: Bendele, Tanja
(86) Internationale Anmeldenummer: PCT/EP2018/076592
(87) Internationale Veröffentlichungsnummer: WO 2019/068612

(56) Entgegenhaltungen:
- EP-A1- 2 965 710
- EP-A1- 2 965 710
- WO-A1-2018/074583
- WO-A1-2018/074583
- WO-A1-2018/074583
- CN-A- 104 688 367
- CN-A- 104 688 367
- DE-A1- 10 055 312
- DE-A1- 10 055 312
- DE-A1- 10 055 312
- DE-A1-102014 209 085
- DE-A1-102014 209 085
- DE-A1-102015 121 858
- DE-A1-102015 121 858
- DE-A1-102015 121 858
- GB-A- 1 457 935
- GB-A- 1 457 935
- JP-A- 2015 137 251
- JP-A- 2015 137 251
- JP-A- 2015 137 251
- US-B2- 9 662 189
- US-B2- 9 662 189

## Beschreibung

Gegenstand der Erfindung ist ein Verfahren zur Herstellung von Materialblöcken eines polymerisierten, dentalen Kompositmaterials sowie die Materialblöcke erhältlich nach dem Verfahren, indem (i) ein polymerisierbares, dentales Kompositmaterial in eine druckfeste Gussform überführt wird, wobei die druckfeste Gussform mehrteilig ist und umfasst a) mindestens ein Bodenteil mit mindestens einem integralen Mittelteil mit mindestens zwei Nestern sowie mindestens einem Deckel oder b) mindestens ein Bodenteil, mindestens ein Mittelteil mit mindestens zwei Nestern sowie mindestens einem Deckel, (ii) das polymerisierbare, dentale Kompositmaterial in der druckfesten Gussform mit einem Druck im Bereich von 100 bis 500 MPa beaufschlagt wird und (iii) zumindest ein Teil der Gussform oder das polymerisierbare Material definiert auf eine Temperatur von 90 bis 150 °C erhitzt wird, wobei das polymerisierbare dentale Kompositmaterial in der druckfesten Gussform heißisostatisch gepresst und polymerisiert wird.

Ein Verfahren zur Herstellung eines Materialblocks eines polymerisierten dentalen Kompositmaterials in einer druckfesten Gußform ist aus US 9 662 189 B2 bekannt.

Bei der Herstellung von Komposit-Fräsblöcken aus hochgefüllten Kompositen, kommt es aufgrund der Dimensionierung und des Polymerisationsschrumpfes der Fräsblöcke häufig zur Rissbildung. Des Weiteren ist die unerwünschte Bildung von Blasen bei der Herstellung und Injektion der hochgefüllten Kompositpasten eine weitere technische Herausforderung bei der Herstellung von Fräsblöcken. Durch diese Fehlstellen erhöht sich die Ausschussrate der Fräsblöcke. Besonders nachteilig sind im Material gebildete, nicht sichtbare Blasen, die sich erst bei der Materialbearbeitung bemerkbar machen.

Es bestand daher die Aufgabe, ein Verfahren zur Herstellung von Komposit-Fräsblöcken bereitzustellen, welches für Material-abtragende Verfahren, vorzugsweise einer fräsenden oder mittels Laserenergie Kompositmaterial-abtragenden Bearbeitung, geeignet ist. Des Weiteren sollen durch das Verfahren Fräsblöcke einer definierten Dimension wirtschaftlich herstellbar sein. Das Verfahren soll zuverlässig die Ausbildung von Defekten, Lunkern, Rissen, Blasen, Veränderungen der Außengeometrie und/oder Spannungen innerhalb der Fräsblöcke vermeiden, vorzugsweise verhindern. Die nach dem Verfahren hergestellten Fräsblöcke sind zur Herstellung von Einzelkronen und kleingliedrigen Brücken geeignet.

Gelöst werden die Aufgaben mit dem erfindungsgemäßen Verfahren nach Anspruch 1 sowie durch die druckfeste Gussform nach Anspruch 12.

Erfindungsgemäß wird die Aufgabe dadurch gelöst, dass ein hochgefülltes und hochviskoses Komposit, vorzugsweise in eine Metallform, mit mindestens zwei Nestern, in den gewünschten Größen, zur Herstellung der Materialblöcke gefüllt wird und unter definiertem Erwärmen und definiertem hohem Druck, auspolymerisiert wird.

Gegenstand der Erfindung ist ein Verfahren zur Herstellung mindestens eines Materialblocks eines polymerisierten, dentalen Kompositmaterials, insbesondere mindestens eines dreidimensionalen Materialblocks, indem
(i) ein polymerisierbares, dentales Kompositmaterial in eine druckfeste Gussform überführt wird, wobei die druckfeste Gussform mehrteilig ist und umfasst a) mindestens ein Bodenteil mit mindestens einem integralen Mittelteil mit mindestens zwei Nestern sowie mindestens einem Deckel oder b) mindestens ein Bodenteil, mindestens ein Mittelteil mit mindestens zwei Nestern sowie mindestens einem Deckel,
(ii) das polymerisierbare, dentale Kompositmaterial in der druckfesten Gussform, insbesondere im jeweiligen Nest der Gussform, mit einem Druck im Bereich von 100 bis 500 MPa beaufschlagt wird, bevorzugt mit 125 bis 250 MPa,
(iii) zumindest ein Teil der Gussform sowie das polymerisierbare Material definiert auf eine Temperatur von 90 bis 150 °C erhitzt werden, wobei das polymerisierbare dentale Kompositmaterial in der druckfesten Gussform heißisostatisch gepresst und polymerisiert wird.

Insbesondere wird das dentale Kompositmaterial thermisch polymerisiert und vorzugsweise mindestens ein Materialblock erhalten.

Nach Schritt (iii) kann die Gussform a) unter Druck oder b) unter Normaldruck (1 bar) abkühlen. Vorzugsweise wird auf 20 bis 23 °C abgekühlt. Im nächsten Schritt kann der mindestens eine Materialblock aus der Gussform, insbesondere aus dem Nest, entnommen werden. Vorzugsweise kann je Nest ein Materialblock erhalten werden, der zur Herstellung von prothetischen Versorgungen in einem Material-abtragenden Verfahren geeignet ist.

Im erfindungsgemäßen Verfahren wird das polymerisierbare, dentale Kompositmaterial vorzugsweise in der druckfesten Gussform heißisostatisch gepresst und polymerisiert (nachfolgend HIPP genannt). Nach einer weiteren besonders bevorzugten Ausführungsform wird das polymerisierbare, dentale Kompositmaterial in der druckfesten Gussform heißisostatisch gepresst und, insbesondere über eine einseitige Wärmezufuhr, thermisch gerichtet polymerisiert (HIPP). Als thermisch gerichtet wird vorliegend eine räumlich gerichtete Polymererisationsfront im polymerisierbaren Kompositmaterial verstanden. Diese Polymerisationsfront kann durch eine einseitige Temperierung des polymerisierbaren Kompositmaterials, insbesondere des in einem geometrischen Nest der Gussform befindlichen Kompositmaterials, erzeugt werden.

Der Druck, mit dem die Gussform im Verfahren beaufschlagt wird beträgt 100 bis 500 MPa, bevorzugt 100 bis 250 MPa, besonders bevorzugt 100 bis 200 MPa. Erfindungsgemäß kann der Druck vorzugsweise 125 bis 250 MPa betragen. Der Druck an der Gussform wird während des Verfahrens aufrechterhalten, sofern notwendig gegebenenfalls nachgeregelt, um den eingestellten Druck beizubehalten. In die Gussform wird das Komposit, insbesondere ein pastöses Komposit, im Verfahren unter definiertem Druck und optional bei einer definierten Temperatur eingepresst. Die Gussform wird anschließend mit dem mindestens einen Deckel verschlossen, so dass die druckfeste Gussform mit Deckel auch als Pressform bezeichnet werden kann.

Vorzugsweise weisen die dreidimensionalen Materialblöcke eine geometrische Form auf, insbesondere weisen die Materialblöcke eine definierte geometrische dreidimensionale Figur auf. Bevorzugt weist ein dreidimensionaler Materialblock mindestens eine Kantenlänge von jeweils mindestens 10 mm, vorzugsweise von 14 mm auf. Materialblöcke, die als Fräsblöcke verwendet werden, weisen vorzugsweise die Form von Quadern auf, wobei die Quader vorzugsweise eine Fläche von 12 mm x 14 mm sowie eine Höhe von 17 oder 18 mm, alternativ eine Fläche von 14 x 14 mm, oder 15 x 15 mm sowie eine Höhe von 17 bis 18 mm aufweisen. Eine bis alle Kanten und Ecken können gerade oder abgerundet sein.

Offenbart wird auch ein dentaler Materialblock, der keine Lunker, Risse und/oder Hohlräume aufweist, die in einer Dimension eine Ausdehnung von grösser gleich 0,05 mm aufweisen, vorzugsweise ist deren Dimension kleiner gleich 100 µm, besonders bevorzugt kleiner gleich 50 µm, weiter bevorzugt kleiner gleich 20 µm.

Ebenfalls wird ein Materialblock offenbart, insbesondere ein Quader, der mindestens eine erste Kantenlänge oder einen Durchmesser von größer gleich 14 mm aufweist und mindestens eine zweite Kantenlänge von größer gleich 14 mm und optional eine weitere Kantenlänge von größer gleich 14 mm aufweist.

Im Schritt (i) des Verfahrens wird das Kompositmaterial ohne Vorwärmen bei Raumtemperatur (20 °C) oder vorzugsweise vorgewärmt, insbesondere wird es vorgewärmt auf 25 bis 50 °C, in die Gussform überführt. Vorzugsweise ist das Kompositmaterial auf 35 bis 45 °C vorgewärmt.

Des Weiteren kann es bevorzugt sein, die Gussform auf 25 bis 45 °C temperiert bzw. vorgewärmt vorzulegen, in die dann das vorgewärmte Kompositmaterial überführt wird. Vorzugsweise kann die Gussform auf 30 bis 40 °C vorgewärmt sein.

Nach einer bevorzugten Ausführungsform der Erfindung wird in dem Verfahren in Schritt (i) in (i.1) das polymerisierbare, dentale Kompositmaterial vorgewärmt auf eine Temperatur im Bereich von 25 bis 50 °C, vorzugsweise auf 30 bis 45 °C, insbesondere im Bereich von 35 bis 40°C plus/minus 5 °C, vorzugsweise im Bereich von 35 °C plus/minus 3 °C, in mindestens ein Nest der druckfesten Gussform, insbesondere unter Druck, überführt, vorzugsweise in mindestens zwei Nester der Gussform überführt, und (i.2) mindestens ein mit vorgewärmtem Kompositmaterial gefülltes Nest erhalten wird bzw. mindestens zwei mit vorgewärmtem Kompositmaterial gefüllte Nester erhalten werden. Die Gussform kann vorzugsweise zwei bis hundert Nester, vorzugsweise zwei bis zehn Nester, oder bspw. vier bis zehn Nester aufweisen.

Das Kompositmaterial wird des Weiteren, bevorzugt unter Druck, in die Nester gefüllt und vorzugsweise anschließend mit dem Pressstempel unter Druck gehalten. Der Druck unter dem das Kompositmaterial in die Nester überführt wird, liegt vorzugsweise im Bereich von 2 bis 10 bar, insbesondere 2,5 bis 5 bar.

Ein hochgefülltes und hochviskoses Komposit umfasst einen anorganischen Füllstoffgehalt von 60 bis 85 Gew.-% in Bezug auf die Gesamtzusammensetzung von 100 Gew.-%.

Nachfolgend wird (i.3) auf das mindestens eine mit vorgewärmtem Kompositmaterial gefüllte Nest, ein Deckel der druckfesten Gussform aufgesetzt, wobei am Deckel vorzugsweise mindestens ein Pressstempel angeordnet ist, und der Pressstempel als männliches Teil, in ein Nest als weibliches Teil der Gussform, eingreift.

Alternativ kann, vorzugsweise in (i.1), auf das mindestens eine mit Kompositmaterial gefüllte Nest ein Deckel der druckfesten Gussform aufgesetzt, wobei am Deckel vorzugsweise mindestens ein Pressstempel angeordnet ist, und der Pressstempel als männliches Teil, in ein Nest als weibliches Teil der Gussform, eingreift.

In einer weiteren Alternative kann auf mindestens zwei mit vorgewärmtem Kompositmaterial gefüllte Nester ein Deckel der druckfesten Gussform aufgesetzt werden, wobei am Deckel vorzugsweise mindestens zwei Pressstempel angeordnet sind, und jeder Pressstempel als männliches Teil, in jeweils ein Nest als weibliches Teil der Gussform, eingreift. Die Pressstempel und Nester können ineinandergreifen, vorzugsweise so, dass eine geringe horizontale und/oder vertikale Bewegung der Pressstempel in der Kavität der Nester möglich ist. Pressstempel und Nest sind so ausgebildet, dass der Pressstempel das im Nest befindliche Kompositmaterial zusammenpressen kann, insbesondere kann der Pressstempel reproduzierbar einen definierten Druck auf das Kompositmaterial aufbauen. Insbesondere sind die jeweils zueinander passenden Pressstempel und Nester so ausgebildet, dass der jeweilige Pressstempel das im jeweiligen Nest befindliche Kompositmaterial zusammenpressen kann, insbesondere kann der Pressstempel reproduzierbar einen definierten Druck auf das Kompositmaterial aufbauen. Vorzugsweise wird der nachfolgend genannte Druck über den Pressstempel auf das Kompositmaterial übertragen.

Um das Nest ist eine umlaufende Dichtfläche ausgebildet, als Negativ ist umlaufend um den Pressstempel ebenfalls eine Dichtfläche ausgebildet. Außerhalb der umlaufenden Dichtfläche des Nestes ist im Mittelteil mindestens eine Überlaufrinne zur Aufnahme von überlaufendem bzw. herausgepresstem Kompositmaterial vorgesehen.

Im Verfahrensschritt (ii) wird das polymerisierbare, dentale Kompositmaterial in der druckfesten Gussform mit einem Druck im Bereich von 125 bis 250 MPa beaufschlagt.

Insbesondere kann im Verfahrensschritt (ii) die Gussform mit einem Gewicht von 10 bis 25 Tonnen beaufschlagt werden, vorzugsweise mit von 12 bis 25 Tonnen, besonders bevorzugt von 15 bis 20 Tonnen.

Erfindungsgemäß ist es weiter bevorzugt, wenn das polymerisierbare, dentale Kompositmaterial in der druckfesten Gussform heißisostatisch gepresst und polymerisiert wird, wobei die Polymerisationsfront im Wesentlichen senkrecht zum Vektor der Kraft (N = kg·m·s⁻²) verläuft. Dabei ist es besonders bevorzugt, wenn die Polymerisationsfront senkrecht zum Vektor der Kraft, dem Vektor der Kraft entgegenläuft. Die Bewegungsrichtung der Polymerisationsfront ist dabei parallel zum anliegenden Druck. Im Verfahren ist es bevorzugt, wenn das Bodenteil der Gussform beheizt wird, so dass die Polymerisationsfront der anliegenden Kraft entgegenläuft und vorzugsweise der Druck während des Verfahrens nachgeregelt werden kann. Anschließend wird im Verfahrensschritt (iii) zumindest ein Teil der Gussform und/oder das polymerisierbare Material, definiert auf eine Temperatur von 110 bis 150 °C, erhitzt. Vorzugsweise wird das Bodenteil der Gussform und/oder der Deckel der Gussform auf eine Temperatur im Bereich von 110 °C bis 150 °C erhitzt, vorzugsweise auf 110 bis 130 °C. Bevorzugt wird nur einseitig das Bodenteil oder der Deckel erhitzt, um eine gerichtete Polymerisation zu gewährleisten. Bevorzugt wird im Verfahren (iii) zumindest ein Teil der Gussform und/oder das polymerisierbare Material definiert auf eine Temperatur von 110 bis 150 °C für 0,1 bis 60 Minuten erhitzt.

Dabei ist es weiter bevorzugt, dass das polymerisierbare Material innerhalb von 30 Minuten auf 110 bis 150 °C erhitzt wird, vorzugsweise wird innerhalb von 20 Minuten auf 110 bis 140 °C erhitzt, weiter bevorzugt wird innerhalb von 15 Minuten auf 130 °C erhitzt.

Alternativ ist es bevorzugt, wenn das Bodenteil der Gussform und/oder der Deckel der Gussform innerhalb von 5 bis 30 Minuten auf eine Temperatur im Bereich von 110 bis 150 °C erhitzt wird, vorzugsweise wird innerhalb von 20 Minuten auf 110 bis 140 °C erhitzt, weiter bevorzugt wird innerhalb von 15 Minuten auf 130 °C erhitzt. Über Wärmeleitung wird das polymerisierbare Dentalmaterial erhitzt und polymerisiert.

Dabei wird zumindest ein Teil der Gussform, insbesondere das Bodenteil innerhalb von 20 Minuten auf eine Temperatur von 90 bis 150 °C erhitzt, vorzugsweise wird innerhalb von 15 Minuten auf eine Temperatur von 90 bis 150 °C erhitzt, besonders bevorzugt innerhalb von 15 Minuten auf 110 bis 140 °C. Vorzugsweise auf 120 bis 140 °C plus/minus 5° C innerhalb von etwa 10 Minuten plus/minus 3 Minuten. Bevorzugt wird das Bodenteil erhitzt und das polymerisierbare Kompositmaterial über die Wärmeleitung der Gussform erhitzt. Alternativ kann der Deckel entsprechend erhitzt werden oder der Deckel und das Bodenteil gemeinsam erhitzt werden. Das heißisostatische Pressen wird jedoch vorzugsweise so durchgeführt, dass der Druck von der, der erhitzten Komponente in der Gussform gegenüberliegenden Seite erfolgt, d.h. die Gussform wird von einer Seite mit Druck beaufschlagt und von der gegenüberliegenden Seite erhitzt.

In dem erfindungsgemäßen Verfahren wird vorzugsweise erhalten, vorzugsweise im Schritt (iv), ein Materialblock, insbesondere ein geometrischer Materialblock eines polymerisierten Kompositmaterials, der ein Defektvolumen in Bezug zum gesamten Materialblock von 15• 10⁻⁶ Vol.-% bis 14• 10⁻⁴ Vol.-% aufweist.

In den erfindungsgemäßen Verfahren kann als polymerisierbares, dentales Kompositmaterial ein Kompositmaterial eingesetzt werden, das umfasst (i) 70 bis 85 Gew.-% einer anorganischen Füllstoffkomponente umfassend mindestens ein Dentalglas sowie optional mindestens ein amorphes Metalloxid, wie insbesondere Siliciumdioxid und/oder Zirkondioxid, (ii) 10 bis 30 Gew.-% einer Mischung von mindestens zwei verschiedenen Urethan(meth)acrylaten, (iii) 0,01 bis 5 Gew.-% mindestens eines di-, tri-, tetra- oder multi-funktionellen Monomers, das kein Urethan(meth)acrylat ist, (iv) 0,01 bis 10 Gew.-% mindestens eines Initiators, eines Initiatorsystems sowie optional mindestens eines Stabilisators und optional mindestens eines Pigments, wobei die Gesamtzusammensetzung des Kompositmaterials 100 Gew.-% beträgt.

Gegenstand der Erfindung ist ein polymerisierbares, dentales Kompositmaterial umfassend (i) 70 bis 85 Gew.-% mindestens einer anorganischen Füllstoffkomponente umfassend mindestens ein Dentalglas sowie mindestens ein amorphes Metalloxid, (ii) 10 bis 30 Gew.-% einer Mischung von mindestens zwei verschiedenen Urethan(meth)acrylaten, (iii) 0,01 bis 5 Gew.-% mindestens eines di-, tri-, tetra- oder multi-funktionellen Monomers, das kein Urethan(meth)acrylat ist, und (iv) 0,01 bis 10 Gew.-% mindestens eines Initiators, ein Initiatorsystem sowie optional Stabilisatoren und optional Pigmente, wobei die Gesamtzusammensetzung des Kompositmaterials 100 Gew.-% beträgt sowie ein polymerisiertes Kompositmaterial mit einer Biegefestigkeit von größer gleich 230 MPa und einem Elastizitätsmodul von 15 bis 20 GPa.

Nach einer besonders bevorzugten Ausführungsvariante umfasst das dentale Kompositmaterial (ii) 10 bis 30 Gew.-% einer Mischung von mindestens zwei verschiedenen Urethan(meth)acrylaten umfassend mindestens ein difunktionelles Urethan(meth)acrylat mit bivalenter alicyclischer Gruppe und ein difunktionelles Urethan(meth)acrylat mit bivalenter Alkylen-Gruppe, wie UDMA, sowie optional mindestens ein mindestens tetrafunktionelles dendritisches Urethan(meth)acrylat.

Besonders bevorzugte difunktionelle Urethan(meth)acrylate mit bivalenter alicyclischer Gruppe umfassen ein bifunktionelles 2'-Aza-alkylen-tetrahydrodicyclopentadien mit 5 bis 20 C-Atomen sowie optional mit 2 bis 5 O-Atomen und optional weiteren 1 bis 3 N-Atomen im Alkylen-Rest. Besonders bevorzugt sind Bis-(4',7'-dioxa-3',8'-dioxo-2'-aza-decyl-9'-en)tetra-hydro-dicyclopentadien, Bis-(4',7'-dioxa-3',8'-dioxo-2'-aza-9'-methyl-decyl-9'-en)-tetrahydrodicyclopentadien und/oder Mischungen davon sowie Mischungen der Isomere. Die Isomere können umfassen die 3,8- / 3,9- / 4,8- / 3,10- / 4,10-Isomere, die ggf. als cis- oder trans-Isomer vorliegen können. Nachfolgend ist beispielhaft die verallgemeinerte Struktur des Bis-(4',7'-dioxa-3',8'-dioxo-2'-aza-decyl-9'-en)tetrahydrodicyclopentadiens dargestellt:

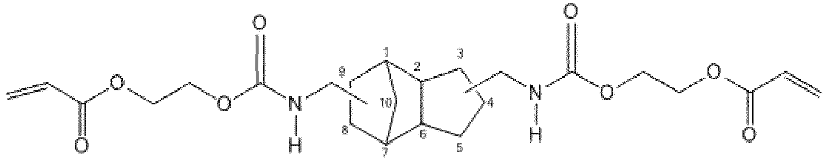

Bevorzugt beträgt der Gehalt an Komponenten (iii) 0,15 bis 5 Gew.-%, besonders bevorzugt 1,0 bis 2 Gew.-%, eines Di-Methacrylesters eines Polyethers, wie vorzugsweise einem DimethacrylatPolyethylenglycol, Dimethacrylat-Polypropylenglycol. Besonders bevorzugt sind Dimethacrylattriethylenglycol, (TEGDMA) und Diethylenglycoldimethacrylat (DEGMA).

Offenbart ist ferner ein Materialblock eines polymerisierten, dentalen Kompositmaterials, insbesondere ein geometrischer Materialblock, erhältlich nach dem erfindungsgemäßen Verfahren, der vorzugsweise eine Biegefestigkeit von größer gleich 230 MPa und ein Elastizitätsmodul von 15 bis 20 GPa aufweist. Zur Bestimmung wird die Norm ISO6872 aufgrund der Dimension der Prüfstäbchen gewählt. Der Materialblock ist geeignet, in einem Verfahren zur Material-abtragenden Bearbeitung mittels Fräsen und/oder einem mittels Laserenergie Material-abtragenden Verfahrens eingesetzt zu werden.

Ein solcher Materialblock eines polymerisierten Kompositmaterials weist vorzugsweise ein Defektvolumen in Bezug zum gesamten Materialblock von 15 • 10⁻⁶ Vol.-% bis 14 • 10⁻⁴ Vol.-% auf, vorzugswiese von 20 • 10⁻⁶ Vol.-% bis 10 • 10⁻⁵ Vol.-%.

Der Materialblock ist vorzugsweise ein Zylinder mit den folgenden Dimensionen: Höhe von größer gleich 10 mm bis kleiner gleich 15 mm und einem Radius von größer gleich 3 mm bis kleiner gleich 7 mm, alternativ mit einer Höhe von größer gleich 10 mm bis kleiner gleich 20 mm und einem Radius von größer gleich 5 mm bis kleiner gleich 7 mm, die Dimensionen eines Quaders des Materialblocks betragen vorzugsweise a, b und c größer gleich 4 mm, insbesondere größer gleich 10 mm und a kleiner gleich 20 mm, insbesondere a kleiner gleich 18 mm, b kleiner gleich 14 mm und c kleiner gleich 20 mm, insbesondere c kleiner gleich 18 mm.

Der Materialblock ist ein monochromer Materialblock aus einem Kompositmaterial, insbesondere ein homogener, monochromer Materialblock.

Ferner kann der Materialblock aus polymerisiertem Kompositmaterial verwendet werden, zur Herstellung von dentalen prothetischen Versorgungen umfassend Kronen, Inlays, Onlays, Superstrukturen, künstliche Zähne, Prothesenzähne, Zahnbrücken, dentale Stege, Spacer, Veneer eines Fräsrohlings, von Dentalprothesen, eines Teils einer chirurgischen Prothese, eines Implantats und kieferorthopädischer Apparate. Das polymerisierbare Kompositmaterial kann zudem verwendet werden als Kompositmaterial zur Herstellung von direkten, adhäsiven, dentalen Restaurationen, kieferorthopädischen Apparaten und Instrumenten.

Ferner ist Gegenstand der Erfindung ein Verfahren, in dem eine druckfeste Gussform eingesetzt wird, die mehrteilig ist und a) mindestens ein Bodenteil mit mindestens einem integralen Mittelteil mit mindestens einem Nest, vorzugsweise mit mindestens zwei Nestern bis 20 Nestern, vorteilhaft mit 2 bis 6 Nestern, sowie mindestens einen Deckel aufweist. Alternativ kann die mehrteilige Gussform b) mindestens ein Bodenteil, insbesondere ein planares Bodenteil, mindestens ein Mittelteil, mit mindestens einem Nest, vorzugsweise mit mindestens zwei Nestern, sowie mindestens einem Deckel aufweisen. Das Bodenteil und das Mittelteil können werkstoffeinstückig oder mehrteilig ausgebildet sein. Unter integral ist zu verstehen, dass das Bodenteil und das Mittelteil mit mindestens einem Nest, vorzugsweise mit mindestens zwei optional bis 50 Nestern, einteilig aus einem integralen Werkstück hergestellt sind.

Die druckfeste Gussform, das Bodenteil, das Mittelteil mit mindestens einem Nest, vorzugsweise mit mindestens zwei Nestern und/oder der Deckel können jeweils unabhängig aus einem Metall, einer metallischen Legierung oder einem temperaturbeständigen Kunststoff, wie einem Hochleistungspolymer, oder temperaturbeständigen Hybridmaterial gebildet sein. Vorzugsweise sind alle Komponenten der Gussform aus dem gleichen Material. Vorzugsweise sind sie aus einem Stahl gefertigt, bevorzugte Stähle sind Chrom und/oder Molybdän enthaltende Stähle, wie beispielsweise 1.2343 (C 0,37 / Si 1,0 / Cr 5,3 / Mo 1,3 / V 0,4), vorzugsweise gehärtet, 1.2312 (C 0,4 / Mn 1,4 / Cr 1,9 / Mo 0,2 / S 0,05) oder 1.4571 (Cr 17 / Mo 2 / No 11,5 / Ti 0,7), Edelstahl, vorzugsweise ist die Oberfläche des Edelstahls nicht elektropoliert (die Angaben sind in Gew.-%). Die Oberfläche der Nester in der Gussform ist vorzugsweise mit einer definierten Oberflächenrauigkeit versehen. Als weitere Materialien kommen in Betracht Keramik, Siliciumcarbid sowie druckfeste Hybridmaterialien.

Gleichfalls Gegenstand der Erfindung ist eine druckfeste Gussform, insbesondere geeignet zur Verwendung im erfindungsgemäßen Verfahren, wobei die druckfeste Gussform mehrteilig ist und mindestens ein Bodenteil, insbesondere ein planares Bodenteil, mindestens ein Mittelteil mit mindestens zwei Nestern, die eine innere Oberfläche mit einer definierten Oberflächenrauigkeit mit einem Mittenrauwert von Rₐ N3 bis N9 aufweisen, sowie mindestens einem Deckel umfasst. Alle Komponenten der druckfesten Gussform sind vorzugsweise aus Edelstahl gefertigt.

Das mindestens eine Nest in der Gussform weist vorzugsweise eine geometrische Form auf, insbesondere weist das Nest eine definierte geometrische dreidimensionale Figur auf. Vorzugsweise ist die geometrische Form ohne Hinterschneidunge(n) ausgebildet. Des Weiteren weist die geometrische Form eines Nestes eine Formschräge auf, insbesondere mit einem Öffnungswinkel von 0,5° bis 2°, vorzugsweise von 1° bis 2°. Bevorzugt ist das mindestens eine Nest im Wesentlichen rechteckig konisch zulaufend ausgebildet.

Die innere Oberfläche des mindestens einen Nestes weist vorzugsweise eine definierte Oberflächenrauigkeit auf, insbesondere mit einem Mittenrauwert von Rₐ N3 bis N9, vorzugsweise bei N4 bis N8, bevorzugt bei N4 bis N7, besonders bevorzugt bei N6. Rₐ ist vorzugsweise kleiner 1,0 µm.

Vorteilhaft weist das Nest 2 eine kleine Formschräge von ca. 1 bis 2° auf, um nach dem Polymerisationsprozess das Entformen des geometrischen Materialblocks 3 zu erleichtern. Ferner hat es sich zum Entformen als günstig erwiesen, wenn die Innenoberfläche 11 des Nestes 2 nicht extrem glatt ist, sondern eine definierte - niedrige - Oberflächenrauheit (ca. kleiner gleich Rₐ 7 oder Rₐ 6) aufweist. Eine zu hohe Rauheit be-/verhindert wieder das Entformen.

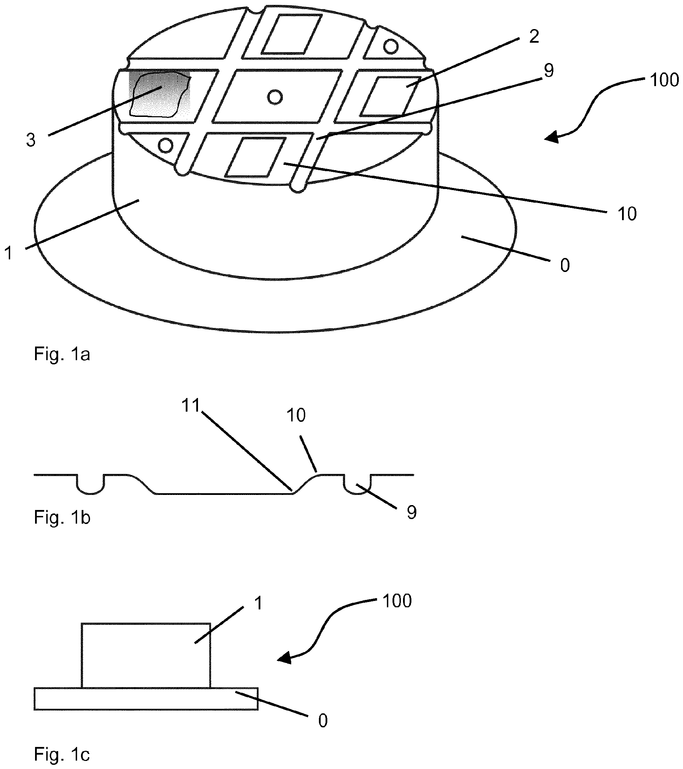

Nachfolgend werden die Figuren 1a bis 1c, 2, 3 und 4 erläutert, ohne die Erfindung auf die konkrete Ausführungsform zu beschränken.

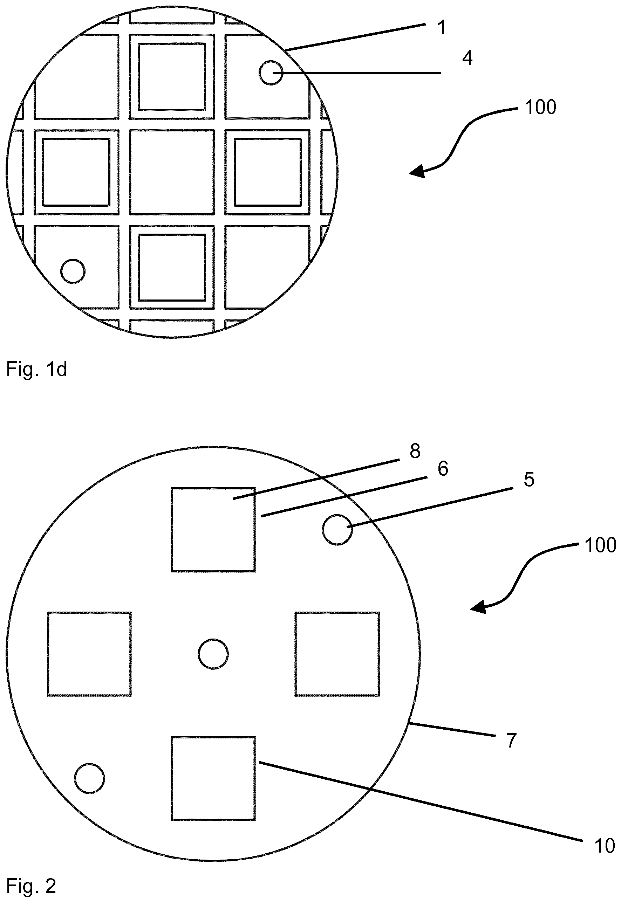

Die druckfeste Gussform 100 kann drei Einzelkomponenten umfassen oder aus drei Komponenten bestehen, einem planaren Bodenteil 0 (siehe Figur 1), einem Mittelteil 1 mit den entsprechenden Nestern (siehe Figuren 1a, 1b und 1c) sowie einem Deckel 7 mit den integrierten Pressstempeln 8 (siehe Figur 2). Die Komponenten sind über entsprechende Bauelemente wie z.B. Führungsbolzen 4 und entsprechenden Sacklöchern 5 in nur einer Position zueinander anzuordnen. In Figur 1b ist ein Querschnitt der Nester verallgemeinert dargestellt, indem die Innenoberfläche **11** sowie auch die Dichtfläche **10** am Nest **2** und die Überlaufrinne **9** dargestellt sind.

Verfahrensablauf: Zunächst wird das Mittelteil **1** auf die Bodenplatte 0 aufgesetzt und über die Führungsbolzen **4** in den vorgesehenen Sacklöchern **5** miteinander verbunden. Anschließend werden die Nester **2** mit einer definierten Menge vorgewärmtem, unpolymerisierten Kompositmaterial, das eine Temperatur von ca. 35 °C aufweist, möglichst blasenfrei befüllt. Nachdem die vorhandenen Nester **2** gefüllt sind, wird der Deckel **7** so aufgesetzt, dass die Pressstempel **8** exakt über den Nestern **2** orientiert sind. Da die Maße von Pressstempel **8** und Nest **2** exakt aufeinander abgestimmt sind, ist die genaue Positionierung der Pressstempel und Nester zueinander wichtig für die Herstellung qualitativ hochwertiger und für die dentale Anwendung geeigneter Materialblöcke. Durch diese genaue Abstimmung aufeinander wird der verbleibende Spalt mit definiertem Spaltmaß, vorzugsweise kleiner gleich 5 1/100 mm, bevorzugt kleiner gleich 3 1/100 mm, zwischen Nest und Pressstempel möglichst gering gehalten.

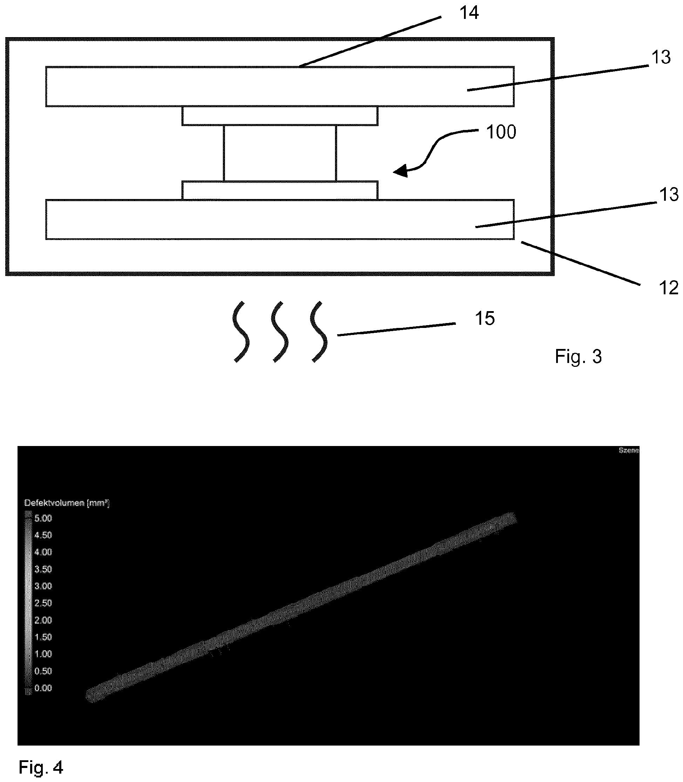

Die druckfeste Gussform **100** wird nun in eine Heißpresse **12** überführt (siehe Fig. 3) und der Druck auf die druckfeste Gussform **100** innerhalb von ca. 5 - 10 sec. auf ca. 15 - 20 Tonnen angehoben. Die leicht konischen Pressstempel **8,** die die Passgenauigkeit verbessern und ein besseres Abdichten des Nestes erlauben, pressen überschüssiges Material aus dem Nest in eine Überlaufrinne **9** und dichten dann mit zunehmender Presskraft über die entsprechenden Dichtflächen **(6** Dichtfläche am Pressstempel, **10** Dichtfläche am Nest) das Nest ab. Aufgrund der gewählten Geometrie der Nester **2,** der Pressstempel **8** und der Dichtflächen **6/10** kann der Pressstempel **8** Druck auf das Kompositmaterial ausüben, wodurch der Polymerisationsschrumpf kompensiert werden kann und vorzugsweise minimiert bis vermieden wird. Zugleich können evtl. im Komposit vorhandene Blasen isostatisch verpresst werden. Nach dem Aufgeben des Pressdrucks wird die Temperatur zum Start der Polymerisation erhöht. Der Pressdruck wird während des gesamten Heißpolymerisationsprozesses aufrechterhalten und nachgeregelt. Im erfindungsgemäßen Verfahren wird daher zunächst der Pressdruck eingestellt und optional später die Temperatur definiert auf 90 bis 150 °C erhitzt, wobei vorzugsweise über den gesamten Zeitraum in dem erhitzt wird, der Pressdruck nachgeregelt wird. Vorzugsweise wird auch beim Abkühlen der Pressdruck aufrechterhalten.

Zur Aufnahme der hohen Press-Kräfte ist die gesamte Form **100** vorteilhaft aus einem vorgenannten Stahl gefertigt, wobei das Mittelteil 1 zusätzlich noch gehärtet ist, damit sich das Nest geometrisch nicht verformt.

Nach dem Schließen der Pressplatten **13** der Heißpresse **12** gemäß Figur 3 wird die Form **100** durch Wärmeleitung langsam in ca. 10 min auf 120 °C erhitzt, um die Polymerisationsreaktion zu starten. Die druckfeste Gussform **100** wird dabei unter einem Druck **14** von 125 bis 250 MPa über eine anliegende Kraft am Deckel **7** gehalten. Dabei ist es bevorzugt, nur eine Pressplatte **13,** hier die Bodenplatte **0,** zu erhitzen, um die Polymerisation gerichtet vom Boden zum Deckel **7** zu steuern. Durch diese Maßnahme kann der gegenüberliegende Pressstempel im Deckel **7** bis zum Schluss nachgepresst werden und den Polymerisationsschrumpf kompensieren. Gleichfalls ist es möglich, dass die Deckelplatte **7** erhitzt wird und die Bodenplatte **0** weiter mit Druck **14** beaufschlagt wird.

Nach Abschluss des Polymerisationsprozesses wird die Form zur Vermeidung von Spannungen innerhalb von 10 min gerichtet auf ca. 40 °C abgekühlt, die Form auseinandergebaut und die auspolymerisierten Blöcke entnommen. Die Kühlung erfolgt vorzugsweise zur Vermeidung von Spannungen beim Abkühlen symmetrisch von beiden Seiten über den Deckel und das Bodenteil.

Die Überprüfung der Materialblöcke auf nicht sichtbare Blasen kann mittels Röntgen CT erfolgen. In der in Figur 4 dargestellten Abbildung können in definierten inkrementellen Schichten einer definierten Dicke, Hohlräume als Defektvolumen nachgewiesen werden. Erfindungsgemäß sind Materialblöcke eines polymerisierten Kompositmaterials erhältlich, die ein Defektvolumen in Bezug zum gesamten Materialblock von kleiner gleich 15 • 10⁻⁶ Vol.-% bis 14 • 10⁻⁴ Vol.-% aufweisen. Die Analyse der Proben erfolgt mit der zerstörungsfreien Methode Röntgen CT.

### Bezugszeichenliste:

- 0: Bodenteil, insbesondere Bodenplatte
- 1: Mittelteil
- 2: Nester
- 3: Materialblock
- 4: Führungsbolzen
- 5: Sacklöcher
- 6: Dichtfläche am Pressstempel
- 7: Deckel, insbesondere Deckelplatte
- 8: Pressstempel
- 9: Überlaufrinne
- 10: Dichtfläche am Nest
- 11: Innenoberfläche
- 12: Heißpresse
- 13: Pressplatten
- 14: Druck
- 15: Temperierung
- 100: druckfeste Gussform

## Patentansprüche

1. Verfahren zur Herstellung mindestens eines Materialblocks (3) eines polymerisierten dentalen Kompositmaterials, indem
(i) ein polymerisierbares, dentales Kompositmaterial in eine druckfeste Gussform (100) überführt wird, wobei die druckfeste Gussform (100) mehrteilig ist und umfasst a) mindestens ein Bodenteil (0) mit mindestens einem integralen Mittelteil (1) mit mindestens zwei Nestern (2) sowie mindestens einem Deckel (7) oder b) mindestens ein Bodenteil (0), mindestens ein Mittelteil (1) mit mindestens zwei Nestern (2), sowie mindestens einem Deckel (7),
(ii) das polymerisierbare dentale Kompositmaterial in der druckfesten Gussform mit einem Druck im Bereich von 100 bis 500 MPa beaufschlagt wird,
(iii) zumindest ein Teil der Gussform sowie das polymerisierbare Material definiert auf eine Temperatur von 90 bis 150 °C erhitzt werden,
wobei das polymerisierbare dentale Kompositmaterial in der druckfesten Gussform heißisostatisch gepresst und polymerisiert wird.

2. Verfahren nach Anspruch 1, **dadurch gekennzeichnet, dass** die druckfeste Gussform, das Bodenteil, das Mittelteil mit mindestens einem Nest und/oder der Deckel jeweils unabhängig aus einem Metall, einer metallischen Legierung oder einem temperaturbeständigen Kunststoff oder temperaturbeständigen Hybridmaterial sind.

3. Verfahren nach Anspruch 1 oder 2, in dem in (i.1) das polymerisierbare dentale Kompositmaterial vorgewärmt auf eine Temperatur im Bereich von 25 bis 50 °C in mindestens ein Nest der druckfesten Gussform überführt wird, und (i.2) mindestens ein mit vorgewärmtem Kompositmaterial gefülltes Nest erhalten wird.

4. Verfahren nach einem der Ansprüche 1 bis 3, in dem a) in (i.3) auf das mindestens eine mit vorgewärmten Kompositmaterial gefüllte Nest, ein Deckel der druckfesten Gussform aufgesetzt wird, wobei am Deckel vorzugsweise mindestens ein Pressstempel (8) angeordnet ist, und der Pressstempel als männliches Teil, in ein Nest (2) als weibliches Teil der Gussform (100), eingreift, oder b) in (i.1) auf das mindestens eine mit Kompositmaterial gefüllte Nest ein Deckel der druckfesten Gussform aufgesetzt wird, wobei am Deckel vorzugsweise mindestens ein Pressstempel angeordnet ist, und der Pressstempel als männliches Teil, in ein Nest als weibliches Teil der Gussform, eingreift.

5. Verfahren nach einem der Ansprüche 1 bis 4, **dadurch gekennzeichnet, dass** (ii) das polymerisierbare dentale Kompositmaterial in der druckfesten Gussform mit einem Druck im Bereich von 125 bis 250 MPa beaufschlagt wird.

6. Verfahren nach einem der Ansprüche 1 bis 5, **dadurch gekennzeichnet, dass** (iii) zumindest ein Teil der Gussform oder das polymerisierbare Material definiert auf eine Temperatur von 110 bis 150 °C für 0,1 bis 60 Minuten erhitzt wird.

7. Verfahren nach einem der Ansprüche 1 bis 6, **dadurch gekennzeichnet, dass** das polymerisierbare dentale Kompositmaterial in der druckfesten Gussform heißisostatisch gepresst und polymerisiert wird, wobei die Polymerisationsfront im Wesentlichen senkrecht zum Vektor der Presskraft (N) verläuft.

8. Verfahren nach einem der Ansprüche 1 bis 7, **dadurch gekennzeichnet, dass** das polymerisierbare dentale Kompositmaterial in der druckfesten Gussform heißisostatisch gepresst und thermisch gerichtet, polymerisiert wird (HIPP).

9. Verfahren nach einem der Ansprüche 1 bis 8, **dadurch gekennzeichnet, dass** eine räumlich gerichtete Polymerisationsfront durch eine einseitige Temperierung des in einem geometrischen Nest der Gussform befindlichen polymerisierbaren Kompositmaterials erzeugt wird.

10. Verfahren nach einem der Ansprüche 1 bis 9, **dadurch gekennzeichnet, dass** das polymerisierbare dentale Kompositmaterial, umfasst
(i) 70 bis 85 Gew.-% einer anorganischen Füllstoffkomponente umfassend mindestens ein Dentalglas sowie optional mindestens ein amorphes Metalloxid, insbesondere amorphes Siliciumdioxid und/oder Zirkondioxid,
(ii) 10 bis 30 Gew.-% einer Mischung von mindestens zwei verschiedenen Urethan(meth)acrylaten,
(iii) 0,01 bis 5 Gew.-% mindestens eines di-, tri-, tetra- oder multi-funktionellen Monomers, das kein Urethan(meth)acrylat ist,
(iv) 0,01 bis 10 Gew.-% mindestens eines Initiators, eines Initiatorsystems sowie optional mindestens eines Stabilisators und optional mindestens eines Pigments, wobei die Gesamtzusammensetzung des Kompositmaterials 100 Gew.-% beträgt.

11. Verfahren nach einem der Ansprüche 1 bis 10, **dadurch gekennzeichnet, dass** ein Materialblock, insbesondere ein geometrischer Materialblock eines polymerisierten Kompositmaterials erhalten wird, der ein Defektvolumen in Bezug zum gesamten Materialblock von 15• 10⁻⁶ Vol.-% bis 14• 10⁻⁴ Vol.-% aufweist.

12. Druckfeste Gussform (100) zur Verwendung in einem Verfahren nach einem der Ansprüche 1 bis 11, **dadurch gekennzeichnet, dass** die druckfeste Gussform (100) mehrteilig ist und mindestens ein Bodenteil (0), mindestens ein Mittelteil (1) mit mindestens zwei Nestern (2), die eine innere Oberfläche mit einer definierten Oberflächenrauigkeit mit einem Mittenrauwert von Rₐ N3 bis N9 aufweisen sowie mindestens einem Deckel (7) umfasst.

13. Druckfeste Gussform nach Anspruch 12, **dadurch gekennzeichnet, dass** die Nester eine geometrische Form aufweisen.

14. Druckfeste Gussform nach Anspruch 12 oder 13 **dadurch gekennzeichnet, dass** das mindestens eine Bodenteil (0) ein planares Bodenteil ist.

## Claims

1. Method for the production of at least one block of material (3) of a polymerized dental composite material, in which
(i) a polymerisable dental composite material is transferred into a pressure-resistant casting mould (100), wherein the pressure-resistant casting mould (100) is formed in multiple parts and comprises at least a) a bottom part (0) having at least one integral center part (1) having at least two mould cavities (2) as well as at least one top cover (7) or b) a bottom part (0), at least one center part (1) having at least two mould cavities (2) as well as at least one top cover (7),
(ii) a pressure in the range of 100 to 500 MPa is applied to the polymerisable dental composite material in the pressure-resistant casting mould,
(iii) at least a part of the casting mould as well as the polymerisable material are heated in a defined manner to a temperature of 90 to 150 °C, wherein
the polymerisable dental composite material in the pressure-resistant casting mould is hot isostatically pressed and polymerized.

2. Method according to claim 1, **characterized in that** the pressure-resistant casting mould, the bottom part, the center part having at least one mould cavity and/or the top cover, each independently, are made of a metal, a metallic alloy, or a temperature-resistant plastic, or a temperature-resistant hybrid material.

3. Method according to claim 1 or 2, in which in (i.1) the polymerisable dental composite material being preheated to a temperature in the range of 25 to 50 °C is transferred into at least one mould cavity of the pressure resistant casting mould, and (i.2) at least one mould cavity filled with preheated composite material is obtained.

4. Method according to any one of the claims 1 to 3, in which a) in (i.3) a top cover of the pressure-resistant casting mould is put onto the at least one mould cavity filled with preheated composite material, wherein preferably at least one press punch (8) is arranged at the top cover, and the press punch as being a male part gears into a mould cavity (2) as being a female part of the casting mould (100), or b) in (i.1) a top cover of the pressure-resistant casting mould is put onto the at least one mould cavity filled with composite material, wherein preferably at least one press punch is arranged at the top cover, and the press punch as being a male part gears into the mould cavity as being a female part of the casting mould.

5. Method according to any one of the claims 1 to 4, **characterized in that** (ii) a pressure in the range of 125 to 250 MPa is applied to the polymerisable dental composite material in the pressure-resistant casting mould.

6. Method according to any one of the claims 1 to 5, **characterized in that** (iii) at least a part of the casting mould or the polymerisable material is heated in a defined manner for 0.1 to 60 seconds to a temperature of 110 to 150 °C.

7. Method according to any one of the claims 1 to 6, **characterized in that** the polymerisable dental composite material in the pressure-resistant casting mould is hot isostatically pressed and polymerized, wherein the polymerization front is substantially perpendicular to the vector of force (N).

8. Method according to any one of the claims 1 to 7, **characterized in that** the polymerisable dental composite material in the pressure-resistant casting mould is hot isostatically pressed and polymerized in a thermally-directed manner (HIPP).

9. Method according to any one of the claims 1 to 8, **characterized in that** the polymerisable dental composite material in the geometrical casting mould is polymerized by one sided heat supply with a spatially directed polymerization front.

10. Method according to any one of the claims 1 to 9, **characterized in that** the polymerisable dental composite material, comprises
(i) 70 to 85 % by weight of an inorganic filler component comprising at least one dental glass, as well as optionally at least one amorphous metal oxide, in particular amorphous silicon dioxide and/or zirconium dioxide,
(ii) 10 to 30 % by weight of a mixture of at least two different urethane (meth)acrylates,
(iii) 0.01 to 5 % by weight of at least one di-, tri-, tetra- or multi-functional monomer not being an urethane (meth)acrylate,
(iv) 0.01 to 10 % by weight of at least one initiator, of an initiator system, as well as optionally of at least one stabilizer, and optionally of at least one pigment, wherein the total composition of the composite material amounts to 100 % by weight.

11. Method according to any one of the claims 1 to 10, **characterized in that** a block of material, in particular a geometrical block of material of a polymerized composite material is obtained, having a defect volume of 15• 10⁻⁶ % by volume to 14• 10⁻⁴ % by volume, based on the total block of material.

12. Pressure-resistant casting mould (100) for use in a method according to any one of the claims 1 to 11, **characterized in that** the pressure-resistant casting mould (100) is formed of multiple parts and comprises at least one bottom part (0), at least one center part (1) having at least two mould cavities (2), which have an inner surface having a defined surface roughness with an average roughness value of Rₐ N3 to N9 and at least one top cover (7).

13. Pressure-resistant casting mould according to claim 12, **characterized in that** the at least one mould cavity has a geometrical shape.

14. Pressure-resistant casting mould according to claim 12 or 13, characterized that the .at least one bottom part (0) is a planar bottom part.

## Revendications

1. Procédé de fabrication d'au moins un bloc de matériau (3) d'un matériau composite dentaire polymérisé, dans lequel
(i) un matériau composite dentaire polymérisable est transféré dans un moule résistant à la pression (100), le moule résistant à la pression (100) étant en plusieurs parties et comprenant a) au moins une partie formant un fond (0) avec au moins une partie centrale intégrale (1) avec au moins deux empreintes (2) ainsi qu'au moins un couvercle (7) ou b) au moins une partie formant un fond (0), au moins une partie centrale (1) avec au moins deux empreintes (2), ainsi qu'au moins un couvercle (7),
(ii) le matériau composite dentaire polymérisable est soumis à une pression de l'ordre de 100 à 500 MPa dans le moule résistant à la pression,
(iii) au moins une partie du moule ainsi que le matériau polymérisable sont chauffés de manière définie à une température de 90 à 150 °C,
le matériau composite dentaire polymérisable étant compacté isostatiquement à chaud et polymérisé dans le moule résistant à la pression.

2. Procédé selon la revendication 1, **caractérisé en ce que** le moule résistant à la pression, la partie formant un fond, la partie centrale avec au moins une empreinte et/ou le couvercle sont chacun indépendamment faits d'un métal, d'un alliage métallique ou d'un plastique résistant à la température ou d'un matériau hybride résistant à la température.

3. Procédé selon la revendication 1 ou 2, dans lequel le matériau composite dentaire polymérisable préchauffé à une température comprise entre 25 et 50°C est transféré dans au moins une empreinte du moule résistant à la pression dans (i.1) et dans lequel on obtient au moins une empreinte remplie de matériau composite préchauffé dans (i.2).

4. Procédé selon l'une des revendications 1 à 3, dans lequel a) un couvercle du moule résistant à la pression est placé sur l'au moins une empreinte remplie de matériau composite préchauffé dans (i.3), au moins un poinçon de pressage (8) étant de préférence disposé sur le couvercle, et le poinçon de pressage comme partie mâle s'engageant dans une empreinte (2) comme partie femelle du moule (100), ou b) un couvercle du moule résistant à la pression est placé sur l'au moins une empreinte remplie de matériau composite dans (i.1), au moins un poinçon de pressage étant de préférence disposé sur le couvercle, et le poinçon de pressage comme partie mâle s'engageant dans une empreinte comme partie femelle du moule.

5. Procédé selon l'une des revendications 1 à 4, **caractérisé en ce que** (ii) le matériau composite dentaire polymérisable est soumis à une pression de l'ordre de 125 à 250 MPa dans le moule résistant à la pression.

6. Procédé selon l'une des revendications 1 à 5, **caractérisé en ce que** (iii) au moins une partie du moule ou le matériau polymérisable est chauffé de manière définie à une température de 110 à 150 °C pendant 0,1 à 60 minutes.

7. Procédé selon l'une des revendications 1 à 6, **caractérisé en ce que** le matériau composite dentaire polymérisable est compacté isostatiquement à chaud et polymérisé dans le moule résistant à la pression, la face de polymérisation étant essentiellement perpendiculaire au vecteur de la force de compression (N).

8. Procédé selon l'une des revendications 1 à 7, **caractérisé en ce que** le matériau composite dentaire polymérisable est polymérisé (HIPP) en étant compacté isostatiquement à chaud et dirigé thermiquement dans le moule résistant à la pression.

9. Procédé selon l'une des revendications 1 à 8, **caractérisé en ce que** une face de polymérisation orientée dans l'espace est créée par une mise en température unilatérale du matériau composite polymérisable se trouvant dans une empreinte géométrique du moule.

10. Procédé selon l'une des revendications 1 à 9, **caractérisé en ce que** le matériau composite dentaire polymérisable comprend
(i) de 70 à 85 % en poids d'un composant de charge inorganique comprenant au moins un verre dentaire ainsi qu'en option au moins un oxyde de métal amorphe, notamment du dioxyde de silicium et/ou du dioxyde de zirconium amorphe,
(ii) de 10 à 30 % en poids d'un mélange d'au moins deux (méth)acrylates d'uréthane différents,
(iii) de 0,01 à 5 % en poids d'au moins un monomère difonctionnel, trifonctionnel, tétrafonctionnel ou multifonctionnel, qui n'est pas un (méth)acrylate d'uréthane,
(iv) de 0,01 à 10 % en poids d'au moins un initiateur, un système d'initiateur ainsi qu'en option d'au moins un stabilisateur et en option d'au moins un pigment, la composition totale du matériau composite étant de 100 % en poids.

11. Procédé selon l'une des revendications 1 à 10, **caractérisé en ce que** l'on obtient un bloc de matériau, en particulier un bloc de matériau géométrique d'un matériau composite polymérisé, lequel présente un volume de défauts par rapport au bloc de matériau total de 15• 10⁻⁶ % en vol. à 14• 10⁻⁴ % en vol.

12. Moule résistant à la pression (100), destiné à être utilisé dans un procédé selon l'une des revendications 1 à 11, **caractérisé en ce que** le moule résistant à la pression (100) est en plusieurs parties et comprend au moins une partie formant un fond (0), au moins une partie centrale (1) avec au moins deux empreintes (2) qui présentent une surface intérieure avec une rugosité définie d'une valeur moyenne de Rₐ N3 à N9 , ainsi qu'au moins un couvercle (7).

13. Moule résistant à la pression selon la revendication 12, **caractérisé en ce que** les empreintes présentent une forme géométrique.

14. Moule résistant à la pression selon la revendication 12 ou 13, **caractérisé en ce que** la au moins une partie formant un fond (0) est une partie formant un fond plane.
